# EUROPEAN PATENT SPECIFICATION

(11) **EP 1 908 694 B1**
(45) Date of publication and mention of the grant of the patent: **26.12.2012**
(21) Application number: 06425673.8
(22) Date of filing: 02.10.2006
(51) Int. Cl.: B65D 30/06, B29D 28/00

(54) **Intermediate component for manufacturing packages particularly for horticultural products and food products in general with automatic packaging machines and package thus producible**
Zwischenbestandteil für Herstellung von Verpackungen besonders für Gartenbauprodukte und Nahrungsmittel im allgemeinen, mit automatischen Verpackmaschinen und Verpackung so hergestellt
Elément intermédiaire pour des emballages en particulier pour les produits horticoles et pour des produits alimentaires en général, avec machines d'emballer et conditionnement ainsi producible

(43) Date of publication of application: 09.04.2008
(73) Proprietor: Tenax S.p.A., 23897 Viganò (Lecco) (IT)
(72) Inventor: Maggioni, Pierluigi, 23891 Barzanò (Prov. of Lecco) (IT)
(74) Representative: Modiano, Micaela Nadia

(56) References cited:
- WO-A-01/47697
- FR-A- 1 566 717
- GB-A- 1 206 765
- GB-A- 2 105 654
- US-A- 3 040 966

## Description

The present invention relates to an intermediate component for manufacturing packages particularly for horticultural products and food products in general which can be produced with automatic packaging machines, and to the packages which can thus be produced.

As is known, several horticultural products and food products, such as for example potatoes, citrus fruits and the like, are currently packaged in packages which are substantially bag-shaped and are produced starting from a net-like intermediate component made of plastic material.

Panel-like or sheet-like net-shaped intermediate components are known which are obtained by simple extrusion of plastic material.

Such panel-like net-shaped intermediate components are produced wound in rolls, which are used to feed automatic packaging machines, which in order to produce each individual package unwind and cut a given portion of panel-like net, fold it over and heat-seal it both longitudinally and transversely, at its opposite ends, so as to obtain a closed bag-like package.

Tubular net-like intermediate components are also known which are obtained by weaving or by simple extrusion of plastic materials.

Such tubular net-like intermediate components also are produced wound in rolls which are used to feed automatic packaging machines, which in order to provide a single package unwind and cut a given portion of tubular net-like intermediate component and heat-seal it transversely at its opposite ends so as to obtain a closed bag-like package.

A first drawback of such net-like intermediate components obtained by simple extrusion of plastic materials consists in that they have limited mechanical properties.

Another drawback of net-like intermediate components consists in that the net has limited stability and substantial dimensional variability in the direction of thickness, i.e., at right angles to the plane of extension of the net. This inevitably creates regions of limited contact with the product contained in the packages produced with them, and such regions may lead to abrasions and damage to the product.

Still another drawback of known net-like intermediate components consists in that they have on average a high thickness, which entails a limitation to the length which can be wound onto each individual roll, with consequent problems and high costs for transport, handling and storage of such rolls as well as long and frequent downtimes of the packaging machines to replace the depleted rolls.

In particular, bi-oriented nets made of polypropylene (PP) are known, but their use has not proved to be feasible, since they have proved to be unsuitable due to a defect of poor heat-sealing ability. In particular, such known bi-oriented PP nets, despite having better mechanical characteristics, have a limited percentage of coverage with respect to the total surface considered, and therefore considerable difficulties are encountered both in forming the packages and in particular in providing stable heat-seals and in applying stably any advertising straps, which often also have a structural purpose.

A further drawback of known net-like intermediate components consists in that they have a considerable weight per unit surface (m²), which means that they contain a large amount of plastic material with consequent high costs for production, transport and storage and difficulty in disposing of used packages.

Known tubular net-like intermediate components further have diamond-shaped meshes. The filaments of the two series that cross each other so as to form the net are always inclined at an angle which is nonzero with respect to the longitudinal extension of the net, and the meshes of the net therefore tend to close. The net therefore has the appearance of a continuous ribbon, and this creates not only aesthetic problems but also several problems in handling during packaging.

FR-A-1 566 717 discloses an extruded plastic material sheet for covering fruit and vegetables, having square meshes and a substantially constant thickness after having been flattened by a roller.

WO 2007/116109 A1, a document within the meaning of Articles 54(3) and 56 EPC, discloses a net reticular tubular structure of synthetic plastics material that has been subjected to a two-dimensional molecular orientation in the longitudinal and transverse directions to provide square meshes and to a calendering operation for providing a constant thickness.

The aim of the present invention is to solve the drawbacks of known net-like intermediate components by providing an intermediate component for providing packages particularly for horticultural products and food products in general which can be provided with automatic packaging machines which has higher mechanical strength characteristics.

Another object of the present invention is to provide an intermediate component for providing packages which has a limited content of material and a low weight per unit surface.

Within this aim and object, still another object of the present invention is to provide an intermediate component for providing packages which has a large coverage surface, understood as the part of the surface that is affected by the filaments and nodes of the net, with respect to the total surface of said net, so as to be able to ensure the provision of stable heat-seals and the application of advertising straps and be able to create a particular aesthetic effect which allows to make the product more pleasant as a whole.

Another object of present invention is to provide an intermediate component for providing packages which has a smoother and more uniform surface, reducing considerably any damage due to abrasion of the product contained in the package and at the same time also improving the impression of smoothness to the touch.

Another object of the present invention is to provide an intermediate component for providing packages which has a low average thickness, thus allowing to increase the length that can be provided for each roll and therefore to reduce the transport, handling and storage costs of said rolls and also to reduce the downtimes of packaging machines due to roll changes.

Another object of the present invention is to provide an intermediate component for providing packages, particularly for horticultural and food products in general, which can be provided with automatic packaging machines and can be obtained easily starting from commonly commercially available elements and materials and is further competitive from a merely economical standpoint.

In accordance with the invention, there is provided an intermediate component for providing packages, particularly for horticultural products and food products in general which can be provided by means of automatic packaging machines, as defined in the appended claims.

Further characteristics and advantages of the present invention will become better apparent from the description of a preferred but not exclusive embodiment of an intermediate component for providing packages particularly for horticultural products and food products in general which can be produced by means of automatic packaging machines, illustrated by way of non-limiting example in the accompanying drawings, wherein:

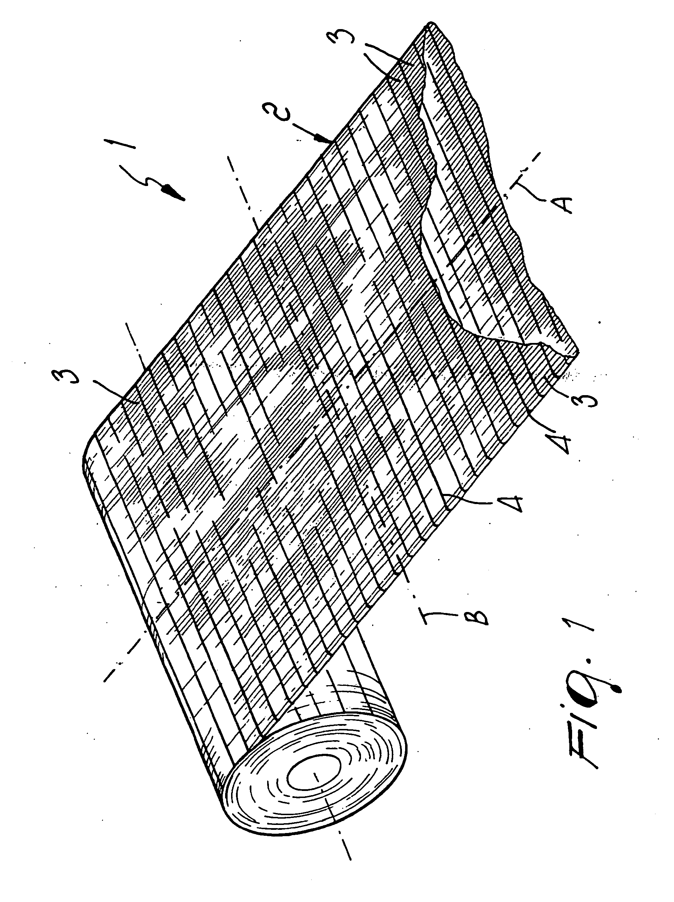

Figure 1 is a schematic view of a tubular intermediate component according to the invention, wound on a roll;

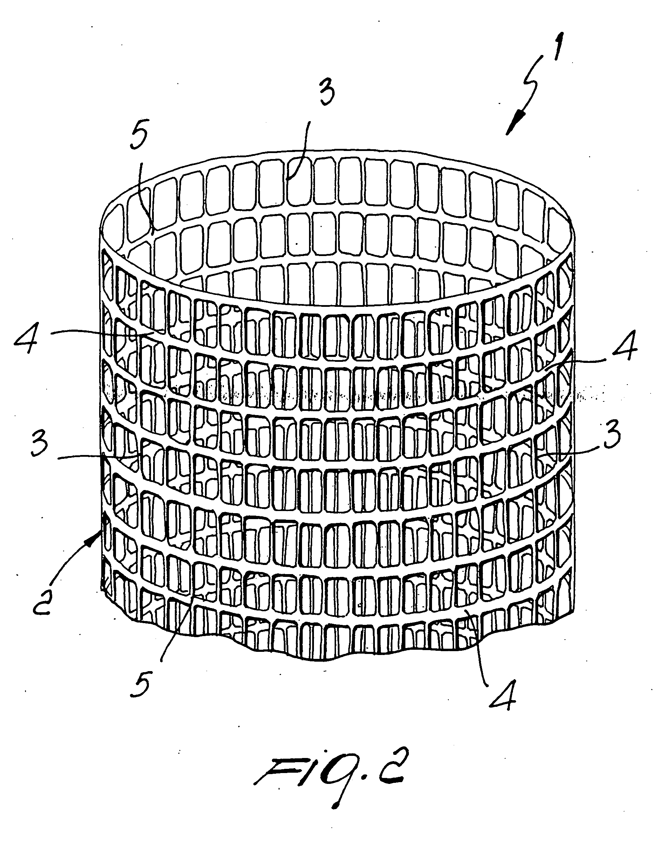

Figure 2 is a schematic enlarged-scale view of a detail of the tubular intermediate component of Figure 1;
Figure 3 is a schematic enlarged-scale view of a portion of the tubular intermediate component of Figure 2;
Figure 4 is a schematic view of a bag-like package which can be provided by means of the intermediate component according to the invention.

With reference to the figures, the reference numeral 1 generally designates an intermediate component for providing packages particularly for horticultural products and food products in general, which can be produced by means of automatic packaging machines.

The intermediate component 1 comprises a tubular element 2, constituted by an extruded polyethylene (PE) net which has a first plurality of filaments 3 arranged parallel to the longitudinal direction of the tubular element 2, designated by the line A, and a second plurality of filaments 4, which are substantially perpendicular, i.e., perpendicular within ordinary tolerances, with respect to the filaments 3 and are therefore parallel to the transverse direction indicated by the line B.

The net-like tubular element 2 is obtained by extrusion and the filaments 3 are stretched, i.e., subjected to a stretching process in order to orient the polyethylene macromolecules.

The meshes of the net therefore have a right-angled rectangular shape.

In a preferred embodiment, shown in the accompanying figures, the tubular element 2 is constituted by a mono-oriented net in which only the filaments 3, which are parallel to the direction A, are stretched, but the filaments 4 parallel to the direction B are not. In this case, each individual mesh has a rectangular shape which is elongated parallel to the direction A, since the filaments 3 are longer and thinner than the filaments 4.

The filaments 3 and 4 intersect at nodes 5.

The process for stretching in the direction A is performed in such a manner as to maintain a reduced variability in the thickness of the net, i.e., so as to obtain a thickness between the different points affected by the filaments 3 and 4 and by the nodes 5 which is comprised within clearly defined margins which will become better apparent hereinafter.

Substantially, a node 5 is provided which is thicker than the filament 3 or 4, said thickness being understood in the direction at right angles to the plane of extension of the net. The thickness of the node 5 is greater than the thickness of the filament 3 or 4 by a quantity of less than 50% and preferably ranging from 15% to 40%.

In a preferred embodiment, the thickness of the filament 3 or 4 is equal to approximately 0.17 mm, while the maximum thickness at each node 5 is less than 0.25 mm.

In order to increase the flatness of the net, the net itself, during the extrusion process proper or after the extrusion and stretching operations, is advantageously subjected to flattening, so as to have a thickness which, by having limited variations between the region of the filaments 3 and 4 and of the nodes 5 can be considered substantially constant and uniform.

The method used allows to increase considerably the coverage surface; obtaining a coverage surface ranging from 20% to 35% of the total surface.

It should be noted that by increasing the coverage surface, the contact surface is increased and so is the possibility of heat-sealing the net in the border regions, designated by the reference numeral 6, of a package 7, and it is further possible also to heat-seal straps or additional elements to the outer surface of the package provided, which are designated by the reference numeral 8 and can have advertising and/or structural purposes.

The smoother surface of the net, thanks to the particular production process used, allows to reduce considerably damage to the product in the package and improves the impression of smoothness to the touch.

The net of the tubular element 2 has a weight per m² of 40 g per m² for the mono-oriented net.

For an equal covered surface and mechanical strength, the net according to the invention weighs approximately 20-30%, for mono-oriented net, less than traditional non-oriented nets.

It should also be stressed that the tensile strength in the main direction A can be measured, per linear meter, as from 0.90 to 1.30 KN/m, while the tensile strength in the direction B at right angles to the preceding direction ranges from 1 to 1.50 KN/m.

The tubular element 2, for an equal tensile strength, is deformed less and advantageously has a percentage deformation, both in the longitudinal direction A and in the transverse direction B, which ranges from 28% to 38% with respect to the initial dimension.

In order to optimize the embodiments, the number of filaments 3 and 4 per linear meter ranges from 150 to 250 filaments per meter in both directions A and B.

The intermediate component 1 is produced wound on a roll, Figure I, which is used to feed an automatic machine for making bag-like packages 7.

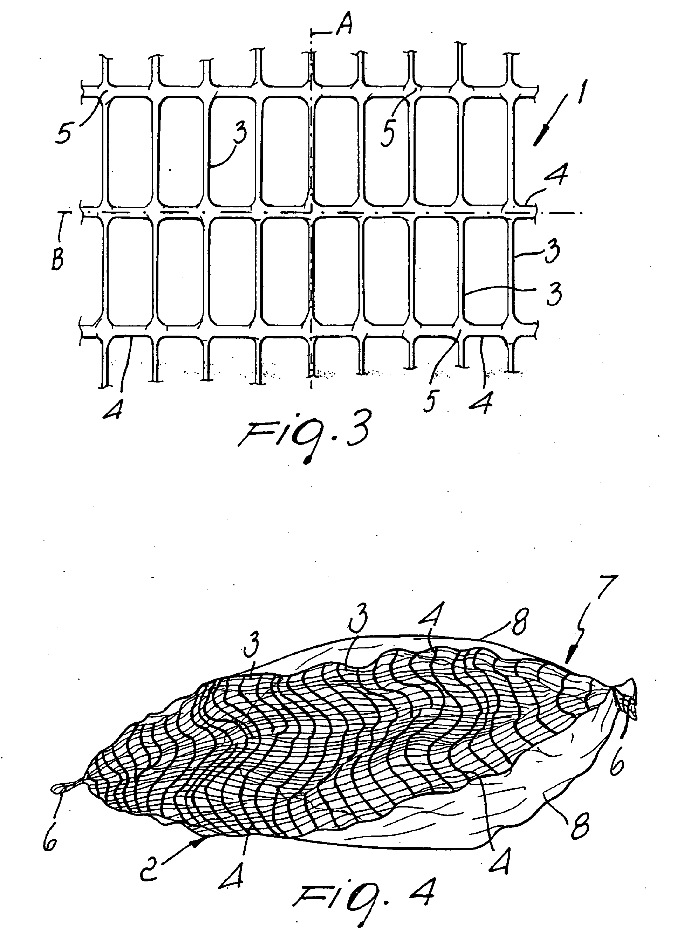

Figure 4 illustrates a package 7 produced with a portion of the tubular element 2 which is heat-sealed at the opposite edges 6 and on which a strap 8 is applied.

From what has been described above it is therefore evident that the invention achieves the intended aim and objects.

The tubular element according to the invention has excellent characteristics of mechanical strength both due to the use of a mono-oriented polyethylene net and due to the structure with perpendicular filaments.

The mono-oriented net of the tubular element according to the invention has a high coverage percentage with respect to the total surface, and this not only improves the aesthetic appearance of the packages that can be obtained with it but also improves the strength and stability of the end heat-seals and of the advertising strap.

The net-like tubular element according to the invention further has a substantially uniform thickness and a substantially smooth surface, and this allows to reduce considerably the risks of abrasion and damage to the products contained in the packages which can be obtained with it, besides providing a more pleasant tactile feel to said packages.

For an equal covered surface and mechanical strength, the net of the tubular element according to the invention has a weight which is approximately 20-30% lower, for mono-oriented net, with respect to known nets.

Conditions being equal, the net-like tubular element according to the invention therefore allows to use a smaller amount of plastic material, consequently containing production costs in addition to reducing the environmental impact, since the material of the used packages to be disposed is reduced.

The use of polyethylene, differently from polypropylene, allows to produce heat-seals which are improved and more stable in a shorter time and with a lower energy expenditure.

The improved mechanical strength of the mono-oriented net, combined with a low thickness and weight per unit surface, allows greater traction of the tubular element according to the invention during the process for winding onto the roll for transport. The intermediate component according to the invention therefore allows to form rolls which, for an equal diameter, which is usually 60 cm, wind a greater length, approximately 2-3 times that of known rolls. This consequently entails a reduction in the costs for transport, handling and storage of said rolls and also allows to increase production rate and improves the management of downtimes of the packaging machine for replacing depleted rolls.

Moreover, the intermediate component according to the invention, by being constituted by a net-like tubular element, facilitates, with respect to laminar nets in sheet form, the provision of bag-like packages, eliminating the steps for folding and longitudinal heat-sealing.

With respect to known net-like tubular elements, finally, the tubular element according to the invention, thanks to the arrangement of the filaments of the net and to their stretching, has right-angled quadrangular meshes which have a stable shape and always remain open both during the production of the packages and after the packages have been produced.

The invention thus conceived is susceptible of numerous modifications and variations, all of which are within the scope of the inventive concept.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An intermediate component (1) for manufacturing packages (7) particularly for horticultural products and food products in general which can be provided by means of automatic packaging machines, comprising a mono-oriented net with a first plurality of filaments (3) arranged substantially parallel to the direction (A) of longitudinal extension of said tubular element (2) and a second plurality of filaments (4) which are substantially perpendicular to said first plurality of filaments (3), said net being mono-oriented by having the filaments of only said first plurality of filaments (3) being stretched while the filaments of said second plurality of filaments (4) not being streched, said net having right-angled rectangular meshes each of which is elongated parallel to the longitudinal extension direction (A) and with said first plurality of filaments (3) being longer and thinner than said second plurality of filaments (4), said net being constituted by an extruded polyethylene tubular element (2) that is subjected to a flattening step in order to give it a substantially constant and uniform thickness.

2. The intermediate component (1) according to claim 1, **characterized in that** the coverage surface of the filaments of said first plurality of filaments (3) and of said second plurality of filaments (4) and of said nodes (5) ranges from 20% to 35% of the total surface.

3. The intermediate component (1) according to one or more of the preceding claims, **characterized in that** said net has a weight per m² of 40 g.

4. The intermediate component (1) according to one or more of the preceding claims, **characterized in that** said first plurality of filaments (3) has a tensile strength per linear meter ranging from 0.90 to 1.30 KN/m, said second plurality of filaments (4) having a tensile strength per linear meter ranging from 1 to 1.5 KN/m.

5. The intermediate component (1) according to one or more of the preceding claims, **characterized in that** said first plurality of filaments (3) and said second plurality of filaments (4) have a density ranging from 150 to 250 filaments per meter.

6. The intermediate component (1) according to one or more of the preceding claims, **characterized in that** said net has a deformation due to elongation, in a longitudinal direction (A) and in a transverse direction (B), ranging from 28% to 38% with respect to the initial dimension.

7. The intermediate component (1) according to one or more of the preceding claims, **characterized in that** said tubular element (2) comprises at least one strap (8) which is rigidly associated with said net.

8. The intermediate component (1) according to one or more of the preceding claims, **characterized in that** said tubular element (2) is wound in a roll.

9. A package (7) particularly for horticultural products and food products in general which can be provided with automatic packaging machines, **characterized in that** it comprises a portion of an intermediate component (1) according to one or more of claims 1 to 8 which is heat-sealed at least at the two opposite ends (6).

## Patentansprüche

1. Zwischenerzeugnis (1) für die Herstellung von Verpackungen (7) insbesondere für Gartenbauprodukte und Nahrungsmittel im Allgemeinen, welches mittels automatischer Verpackungsmaschinen bereitgestellt werden kann, umfassend ein mono-orientiertes Netz mit einer ersten Mehrzahl von Filamenten (3), die im wesentlichen parallel zu der Richtung (A) der Längserstreckung des rohrförmigen Elements (2) angeordnet sind, und einer zweiten Mehrzahl von Filamenten (4), welche im Wesentlichen rechtwinklig zu der ersten Mehrzahl von Filamenten (3) sind, wobei das Netz mono-orientiert ist indem die Filamente nur der ersten Mehrzahl von Filamenten (3) gestreckt sind, während die Filamente der zweiten Mehrzahl von Filamenten (4) ungestreckt sind, wobei das Netz rechtwinklige viereckige Maschen hat, von welchen jede parallel zu der Längserstreckungsrichtung (A) langgestreckt ist und wobei die erste Mehrzahl von Filamenten (3) länger und dünner ist als die zweite Mehrzahl von Filamenten (4), wobei das Netz durch ein aus Polyethylen extrudiertes rohrförmiges Element (2) gebildet ist, das einem Abflachungsschritt unterworfen ist um ihm eine im Wesentlichen konstante und gleichmäßige Dicke zu geben.

2. Zwischenerzeugnis (1) nach Anspruch 1, **dadurch gekennzeichnet, dass** sich die Bedeckungsfläche der Filamente der ersten Mehrzahl von Filamenten (3) und der zweiten Mehrzahl von Filamenten (4) und der Knotenpunkte (5) von 20 % bis 35 % der Gesamtfläche erstreckt.

3. Zwischenerzeugnis (1) nach einem oder mehreren der vorangehenden Ansprüche, **dadurch gekennzeichnet, dass** das Netz ein Gewicht von 40 g pro m² hat.

4. Zwischenerzeugnis (1) nach einem oder mehreren der vorangehenden ansprüche, **dadurch gekennzeichnet, dass** die erste Mehrzahl von Filamenten (3) eine Zugfestigkeit pro laufenden Meter zwischen 0,90 bis 1,30 KN/m hat und die zweite Mehrzahl von Filamenten (4) eine Zugfestigkeit pro laufenden Meter zwischen 1 bis 1,5 KN/m hat.

5. Zwischenerzeugnis (1) nach einem oder mehreren der vorangehenden Ansprüche, **dadurch gekennzeichnet, dass** die erste Mehrzahl von Filamenten (3) und die zweite Mehrzahl von Filamenten (4) eine Dichte von 150 bis 250 Filamente pro Meter hat.

6. zwischenerzeugnis (1) nach einem oder mehreren der vorangehenden Ansprüche, **dadurch gekennzeichnet, dass** das Netz eine Verformung infolge Dehnung in einer Längsrichtung (A) und in einer Querrichtung (B) von 28 % bis 38 % bezüglich der anfänglichen Abmessung hat.

7. Zwischenerzeugnis (1) nach einem oder mehreren der vorangehenden Ansprüche, **dadurch gekennzeichnet, dass** das rohrförmige Element (2) mindestens ein Band (8) umfasst, welches fest mit dem Netz verbunden ist.

8. Zwischenerzeugnis (1) nach einem oder mehreren der vorangehenden Ansprüche, **dadurch gekennzeichnet, dass** das rohrförmige Element (2) zu einer Rolle aufgewickelt ist.

9. Verpackung (7) insbesondere für Gartenbauprodukte und Nahrungsmittel im Allgemeinen, welche mittels automatischer Verpackungsmaschinen bereitgestellt werden kann, **dadurch gekennzeichnet, dass** sie eine Portion eines Zwischenerzeugnisses (1) nach einem oder mehreren der Ansprüche, 1 bis 8 umfasst, welche mindestens an den zwei entgegengesetzten Enden (6) heißverklebt ist.

## Revendications

1. Composant intermédiaire (1) pour la fabrication d'emballages (7) en particulier pour des produits horticoles et des produits alimentaires en général, composant, qui peut être mis à disposition au moyen de machines d'emballage automatiques, comprenant un filet mono-orienté avec une première pluralité de filaments (3) disposés essentiellement parallèlement à la direction (A) de l'extension longitudinale dudit élément tubulaire (2) et une seconde pluralité de filaments (4) essentiellement perpendiculaires à ladite première pluralité de filaments (3), ledit filet étant mono-orienté, étant donné que seuls les filaments de la première pluralité de filaments (3) sont étirés, alors que les filaments de ladite seconde pluralité de filaments (4) ne sont pas étirés, ledit filet ayant des mailles à angles droit rectangulaires, dont chacune est allongée parallèlement à la direction d'extension longitudinale (A), ladite première pluralité de filaments (3) étant plus longue et mince que ladite seconde pluralité de filaments (4), ledit filet étant constitué par un élément tubulaire en polyéthylène extrudé (2) qui subit une étape d'aplatissage, afin de lui conférer une épaisseur essentiellement constante et uniforme.

2. Composant intermédiaire (1) suivant la revendication 1, **caractérisé en ce que** la surface couverte par les filaments de ladite première pluralité de filaments (3) et de ladite seconde pluralité de filaments (4) et par lesdits noeuds (5) se situe dans la plage de 20% à 35% de la surface totale.

3. Composant intermédiaire (1) suivant une ou plusieurs des revendications précédentes, **caractérisé en ce que** le poids au m² dudit filet est de 40g.

4. Composant intermédiaire (1) suivant une ou plusieurs des revendications précédentes, **caractérisé en ce que** ladite première pluralité de filaments (3) présente une résistance à la traction au mètre linéaire qui se situe dans une plage allant de 0.90 à 1.30 KN/m, la résistance à la traction au mètre linéaire de ladite seconde pluralité de filaments (4) se situant dans une plage allant de 1 à 1,5 KN/m.

5. Composant intermédiaire (1) suivant une ou plusieurs des revendications précédentes, **caractérisé en ce que** ladite première pluralité de filaments (3) et ladite seconde pluralité de filaments (4) présentent une densité située dans la plage de 150 à 250 filaments par mètre.

6. Composant intermédiaire (1) suivant une ou plusieurs des revendications précédentes, **caractérisé en ce que** ledit filet présente une déformation, due à l'allongement dans une direction longitudinale (A) et dans une direction transversale (B), qui se situe dans une plage de 28% à 38% par rapport à la dimension initiale.

7. Composant intermédiaire (1) suivant une ou plusieurs des revendications précédentes, **caractérisé en ce que** ledit élément tubulaire (2) comprend au moins un lien de cerclage (8) qui est associé de façon rigide avec ledit filet.

8. Composant intermédiaire (1) suivant une ou plusieurs des revendications précédentes **caractérisé en ce que** ledit élément tubulaire (2) est enroulé pour former un rouleau.

9. Emballage (7) en particulier pour des produits horticoles et alimentaires en général, qui peut être mis à disposition au moyen de machines d'emballage automatiques, **caractérisé en ce qu'**il comprend une portion d'un composant intermédiaire (1) suivant une ou plusieurs des revendications 1 à 8, portion qui est thermosoudée au moins aux deux extrémités opposées (6).
